# EUROPEAN PATENT APPLICATION

(11) **EP 1 798 255 A1**
(43) Date of publication of application: **20.06.2007**
(21) Application number: 05077859.6
(22) Date of filing: 14.12.2005
(51) Int. Cl.: C08J 9/00, C08G 18/36

(54) **Reactive diluent for one or two component PU foams**

(71) Applicant: de Schrijver, Aster, 9831 Deurle (BE)
(72) Inventor: de Schrijver, Aster, 9831 Deurle (BE)
(74) Representative: Colens, Alain M.G.M.

(57) **Abstract**

The invention is directed to a process for preparing precursor mixtures of polymer foam to be packed in pressurized vessels and or aerosol cans. Biodiesel is included as latent hardener arid/or extender and/or liquid filler in polyurethane formulations, more particularly One Component Foams precursor mixtures. The improved formulation avoid long-term deterioration of flexibility and mechanical strength of the foam.

## Description

One component Polyurethane Foams (OCF) are well known and used in aerosol type cans for numerous purposes.

Several diluents and extenders have been used in the past in the production of one-component Polyurethane Foam (OCF).

The more commonly used compounds are chlorinated paraffin and tris-dicloropropylphosphate. When flame retardancy is not a requirement conventional plasticizers such as DOP, DBP, DIOP and DIDP can also be used to a certain extent but with drawbacks since their use induces outflow and variation in long term performance due to slow migration from the foam to the atmosphere.

These long-term changes are mainly :
- lower dimensional stability with occasional cracking
- loss of adhesion to the substrates
- friability and lower resistance to abrasion.

There is therefore still a need for improved shelf life and more constant long-term dimensional stability, as well as improved sealing effect.

The purpose of the present invention is to provide such an improved composition which will also avoid long-term deterioration of flexibility and mechanical strength of the foam. Another advantage is the reduced cost of production.

According to the invention precursors to polyurethane foams, more particularly One component Polyurethane Foams, with improved long-term performance were developed by using "Biodiesel" as extender and latent hardener.

### Background of the invention

According to one aspect, the present invention is concerned with a new composition and a production method to manufacture precursor mixtures in Aerosol type cans for the so-called one component Polyurethane Foam (O.C.F.)

This precursor mixtures are mainly prepared from 4,4' diphenyl methane di-isocyanate (MDI) and polyether polyols that by chemical reaction lead to a liquid quasi-prepolymer with isocyanate functionality.

Several additives have to be used to improve specific proprieties of the final foam, such as flame-retardants, plasticizers, extenders and catalysts.

The isocyanate quasi-prepolymers used in the process according to the present invention may be selected from those disclosed in EP 392788, but many other macromolecular structures of MDI based quasi-prepolymers can also be used.

Preferred isocyanate quasi-prepolymers are made from polyether-polyols and calculated stoechiometric excess of diphenylmethane di-isocyanate composition.

Preferred polyols have an average functionality between 2 and 3 and a number average molecular weight of 500 to 6000 and mostly in the range 1000 to 4800.

The isocyanate terminated quasi-prepolymer compositions may further be blended in the can with other additives and compositions but the free NCO content should remain between 2 and 18% and preferably between 8 and 15% to assure the required reactivity of the liquid froth towards the atmospheric moisture.

Reaction temperature in the can during the mixture and after gas filling should remain in the range 5°C to 60°C and preferably between 20°C and 45°C to avoid segregation at low temperature, and side reactions at high temperature such as allophanate formation, both leading to reduction of shelf life of the can mixture.

### MAIN COMPONENTS OF THE OCF FOAM

The OCF precursor mixture included in the Aerosol type can with a special valve, is produced from the following main components
Polyol or Polyol mixture
Di or poly-isocyanate
Surface active agent
Catalyst
Flame retardant
Extender and/or plasticizer
Colorant (optional)
Compatibilizing Gas
Pressurizing gas mixture

### Polyol or Mixture of Polyols

The polyols which can be utilized in the present invention include, but are not limited to, the following polyether polyols:
(a) alkylene oxide adducts of polyhydroxyalkanes;
(b) alkylene oxide adducts of non-reducing sugars and sugar derivations;
(c) alkylene oxide adducts of polyphenols; and
(d) alkyleneoxide adducts of polyamines and polyhydroxyamines. Alkylene oxides having two to four carbon atoms generally are employed, with propylene oxide, ethylene oxide and mixtures therefore being particularly preferred.

Any material having active hydrogens as determinated by the Zerewitinoff method, may be utilized to some extent and therefore is included within the broad definition of the polyols. For example, amine-terminated polyether polyols, hydroxyl-terminated polybutadiene polyols and many others are known and may be used as a minor component in combination with the above identified conventional polyether polyols.

Generally, the polyol compound should have an equivalent weight in the range of about 400 to about 6000 grams/equivalent and an ethylene oxide content of less than 20%. Preferably the equivalent weight is in the range of about 500 to about 2000 grams/equivalent, and most preferably between about 1000 and 4800 grams/equivalent. The polyol or polyol blend should have an average hydroxyl functionality of at least 2. The equivalent weight is determined from the measured hydroxyl number. The hydroxyl number is defined as the number of milligrams of potassium hydroxide required for the complete hydrolysis of the fully acetylated derivative prepared from one gram of polyol. The relationship between the hydroxyl number and equivalent weight is defined by the equation: OH = 56,100/equivalent weight where OH equals the hydroxyl number of the polyol.

Preferably the polyols should include the poly(oxypropylene) and poly(oxyethyleneoxypropylene) triols.

Ethylene oxide, when used, can be incorporated in any fashion along the polymer chain. Stated another way, the ethylene oxide can be incorporated either in internal blocks, as terminal blocks, or may be randomly distributed along the polyol chain.

However, the manner of incorporation and the ethylene oxide content of the polyol preferably is as noted above. Thus, ethylene oxide is used at a level below about 20% by weight preferably below about 15% by weight, and is located primarily within the interior of the polyol chain.

The amount of polyol used is determinated by the amount of product to be produced. Such amounts may be readily by one skilled in the art.

### Di-isocyanates or Polyisocyanates

Organic isocyanates useful in producing polyurethane foam in accordance with this invention are organic compounds that contain, on average, between about one and a half to about six isocyanate groups and preferably about two isocyanate groups.
Suitable organic polyisocyanates include the hydrocarbon diisocyanates, e.g., the alkylene diisocyanates are the aryldiisocyanates and more specifically, diphenylmethane diisocyanate.

The amount of isocyanate to be used is dependent upon the index of foam desired and the final properties of the foam to be formed. If the index is 100 then there is a stoichiometric equivalent of the amount of isocyanate needed to react with the polyol component and the other active hydrogen containing components in the system. While the present invention may be practiced in a wide range of indexes, the preferred range of use is indexes between 150 to 500 (hereinafter "High Index").

That foams with indexes above 500 (very high index foams) often show no increased hardening due to the stoichiometric excess of isocyanates when used in conventional range of atmospheric moisture.

Within the range of indexes of 150 to 500 it is known in the art that small wings in the index may lead to dramatic changes in foam stability

### Foaming Agents

Water is in this case a secondary blowing agent to produce carbon dioxide by reaction with isocyanate while curing. Other blowing agents that are conventionally used in the art may be used here in, but because of the utility of the formulation of the present invention, large amounts of such agents are no longer needed.
Main Foaming agents include propane, butane, isobutene, Dimethylether and their mixtures in all proportions.

### Surface Active Agents

Suitable stabilizers include "hydrolysable" polysiloxane-polyoxyalkylene block copolymers. Another useful class of loam stabilizers are the "non-hydrolysable" polysiloxane- polyoxyalkylene block copolymers. The latter class of copolymers differs from the above-mentioned polysiloxane-polyoxyalkylene block copolymers in that the polysiloxane moiety is bonded to the polyoxyalkylene moiety through direct carbon-to-silicon bonds, rather than through carbon-to-oxygen-to-silicon bonds.

The stabilizer should be present at about 0.0001 percent to about 5 percent by weight of the total reaction mixture and preferably between 0,01 and 2 percent by weight.

### Catalysts

Catalyst to be used include the standard combinations of tertiary amine and organometallic polyurethane catalysts which should be present at about 0.0001 to 5 weight percent of the reaction mixture. Suitable catalysts include, but are not limited to, dialkyltin salts of carboxylic acid, salts of organic acids, triethylene diamine (TEDA), bis (2,2 1-dimethylamioethyl) either and similar compounds that are known to the art. Catalysts that do not promote allophanate formation are preferred to avoid viscosity drifting on storage.

### Foam Processing Art

A foam processing aid sometimes called Foam Control Agent is used for enhancing the properties of low density, foam processing aid includes a cross linking agent and /or extending agent and preferably a sufficient amount of stabilizer agent, to yield a polyurethane loam having a specific gravity between 10 and 50 kg/m3.

### Detailed description of the invention

Bio diesel was tested as extender in an OCF formulation, with rather surprising effects which may be summarised as :
- Improved shelf life
   In the absence of oxygen the remaining double bonds of Bio diesel do not react and diluting the [NCO] concentration prevent to a certain extent the allophanate formation that leads to higher viscosities.
- Higher stability of the foam (long-term)
   Bio diesel molecules, mainly C16 and C18 aliphatic methyl esters with some double bonds on the backbone tend to act as semi-drying oils forming some cross-links by reaction induced by the atmospheric oxygen.
   This reaction although very slow (2 to 6 month) prevents the migration of the Bio diesel, improving the long-term stability.
- Lower viscosity and high debit
   The rather low viscosity of the Bio diesel lowers the viscosity of the mixture in the aerosol can or pressure vessel assuring an high debit (and shaking characteristics. However, excess of Bio diesel in the formulation can result in out flow of the froth.

In two component systems, in poarticular 2KPU rigid foam systems, similar advantages were observed.

### The New Component introduced

Bio diesel 100% also called only Bio diesel is produced by the transesterification of vegetable oils, mostly rapeseed (colza), sunflower, high oleic sunflower and soyabean oils. It consists mainly of a mixture of fatty acid methyl esters.

Bio diesel 100% is also called FAME (Fatty Acids Methyl Esters) and is mixed in the diesel fuel in several different proportions. More common mixtures include 5% or 30% of FAME.

Semi-refined degummed oils are used and the degumming or winterisation step removes a wax fraction that contains triglyceride fraction with the higher saturated long chain fatty content.

Bio diesel is therefore slightly unsaturated and this characteristic is measured by the iodine value that will depend mostly on the type of oil used for the production.

Bio diesel can also be produced using ethanol instead of methanol, leading to the mixture of Ethylesters of the fatty acids.

Viscosity of this type of Bio diesel is slightly higher and economic feasibility occurs only where excess of Bio ethanol is present in the market.

Bio diesel quality parameters impose a very low residual content of glycerine (below 0,2%) and also a very low alkaline metal (Na+ K + Li) content: below 5 p.p.m.

Residual free methanol content varies from producer to producer but is always very low (below 0.1%).

Analytical determination of hydroxyl value was performed on more than 20 samples with different origins and measured hydroxyl valve was always below 1 mg of KOH per gram and very often below 0,5 mg of KOH per gram.

This very low hydroxyl value is of importance in the production of the precursor of the foam since it leads to a very low consumption of additional amount of the di-isocyanate.

This very low hydroxyl value is also important because it reduces the content of urethane linkages in the mixture contributing therefore for the stability (shelf life) by prevention of an allophanate formation.

The very low content of residual glycerine is of utmost importance since it avoids the formation of oligomers with functionality 3 and higher that would lead to high viscosity and reduced shelf life.

The process of the invention provides also an biodiesel additive which is very compatible with the pressurizing gases and since it contains a methyl ester group with some polarity the content of compatibilizers such as DME can be reduced and in some cases eliminated.

It should be noted that the biodiesel according to the invention may also be used in two component PU formulations, contained in the polyol side.

### Glossary

Prepolymer (Isocyanate Prepolymer)
Oligomeric reactive structure with isocyanate functionality

Quasi-prepolymer
Mixture containing prepolymer molecules and non-reacted di or
poly-isocyanate

Extender
Non-reacting additive with incidence on the mechanical properties
of the final foam (flexibility, reduction of friability)

compatibilizing Gas
Pressuring gas with heteroatoms and polarity, typically dimethylether (DME) that assures compatibility of the liquid
mixture with hydrocarbon gases.

### Examples of suitable formulations

OCF (1 KPU) gun foam in aerosol can

| | |
|---|---|
| Polyol | 156 g |
| Chain extender | 2 g |
| Biodiesel | 62 g (may vary from 20 to 200 g) |
| Surfactant | 12 g |
| Catalyst | 2.1g |
| Emulsifying agent and rheology modifier | 9 g |
| MDI | 300 g |
| LPG | 116 g |
| DME | 29 g |

2 KPU rigid foam system (pbw)

| | |
|---|---|
| Polyol OHv 350 | 100 |
| Biodiesel | 20 to 150 |
| Surfactant | 2 |
| Blowing agent (Pentane; F 141b;.) | 20 to 30 |
| Tertiary amine | 2 |
| MDI | 75 |

## Claims

1. A process for preparing precursor mixtures of polymer foam to be packed in pressurized vessels and or aerosol cans comprising a step wherein biodiesel is included as latent hardener and/or extender and/or liquid filler.

2. Process according to claim 1 wherein the polymer foam is a polyurethane foam.

3. Process for preparing one component polyurethane foam (OCF) precursor mixtures to be packed in pressurized vessels and or aerosol cans wherein bio diesel is included as latent hardener and extender.

4. Process according to claim 3 in which biodiesel is used as extender and diluent in formulations in the range 1 percent to 60 percent, preferably in the range of 5 percent to 30 percent leading to a highly stable OCF foam with very stable properties due to non-migration of the extender.

5. Process for preparing polymer foam precursor mixture to be packed in pressurized vessels and or aerosol cans wherein a mixture of methyl and ethyl fatty acid esters is included in the range from 1 to 50 %, preferably 5 to 30% by weight.

6. One component polyurethane foam precursor mixture comprising 1 to 50 %, preferably 5 to 30 percent by weight, of a mixture of methyl and/or ethyl fatty acid esters.

7. A composition comprising an isocyanate quasi-prepolymer based on MDI and a polyether-polyols and 1 to 50 %, preferably 5 to 30 percent by weight, of a mixture of methyl and/or ethyl fatty acid esters.

8. A polyurethane foam comprising between 1 and 50%, preferably 5 to 30%, of a integrated biodiesel component.

9. Process according to claim 1 wherein the polymer foam is a unsaturated polyester foam, a foam based on cyclocarbonate oligomers and primary amine oligomers, a foam based on acrylic oligomers.
